Europäisches Patentamt

European Patent Office

Office européen des brevets

(19)

(11) Veröffentlichungsnummer: **0 075 795**
**B1**

(12) ## EUROPÄISCHE PATENTSCHRIFT

(45) Veröffentlichungstag der Patentschrift:
17.04.85

(51) Int. Cl.⁴: **G 21 C 19/06**

(21) Anmeldenummer: **82108562.8**

(22) Anmeldetag: **16.09.82**

(54) **Lagergestell für langgestreckte Brennelemente.**

(30) Priorität: **29.09.81 DE 3138719**

(43) Veröffentlichungstag der Anmeldung:
**06.04.83 Patentblatt 83/14**

(45) Bekanntmachung des Hinweises auf die Patenterteilung:
**17.04.85 Patentblatt 85/16**

(84) Benannte Vertragsstaaten:
**AT CH FR LI**

(56) Entgegenhaltungen:
**DE - A - 2 629 938**
**DE - A - 2 637 879**
**FR - A - 2 455 339**

(73) Patentinhaber: **KRAFTWERK UNION AKTIENGESELLSCHAFT, Wiesenstrasse 35, D-4330 Mülheim (Ruhr) (DE)**

(72) Erfinder: **Haase, Walter, Bergwerkstrasse 14, D-8757 Karlstein (DE)**

(74) Vertreter: **Mehl, Ernst, Dipl.-Ing. et al, Postfach 22 01 76, D-8000 München 22 (DE)**

**Beschreibung**

Die Erfindung betrifft ein Lagergestell für langgestreckte Brennelemente von Kernreaktoren, mit einer unteren Gitterplatte, die an den für die Brennelemente vorgesehenen Positionen Bohrungen aufweist und mit Versteifungen in Form von geradlinigen Rippen an der Unterseite der Platte versehen ist, die fluchtend in Richtung der Mittelpunkte der Bohrungen verlaufen, wobei an der Unterseite der Platte konzentrisch zu Bohrungen sitzende Rohrstücke durch geradlinige Stege verbunden sind.

Um die Nachwärmeabfuhr nicht zu beeinträchtigen, hat man bei einem aus der DE-A-2 629 938 bekannten Lagergestell zur Versteifung der Platte dienende Rippen zwischen den Bohrungen angeordnet, und zwar in Form geradliniger Rechteckprofile, die über praktisch die gesamten Abmessungen der Platte verlaufen und allenfalls durch Füße unterbrochen sind, die an wenigen Stellen der Gitterplatte neben den Bohrungen an den Brennelementpositionen vorgesehen sind. Dabei ist der Herstellungsaufwand deswegen, weil die Rippen großstückig hergestellt und befestigt werden können, anscheinend so gering wie möglich. Dennoch geht die Erfindung von der Aufgabe aus, den Herstellungsaufwand weiter zu verringern, wobei auch die Menge des verwendeten Materials günstiger sein soll, weil es sich um austenitisches Material handelt, das erhebliche Kosten verursacht.

Gemäß der Erfindung ist vorgesehen, daß an jeder Bohrung ein Rohrstück vorgesehen ist, dessen Länge mindestens gleich dem Bohrungsdurchmesser ist, und daß die Rohrstücke durch dazwischenliegende Stege kreuzweise verbunden sind.

Mit der Erfindung kann erstaunlicherweise eine Verbilligung solcher Lagergestelle um 10 bis 20% erreicht werden, und zwar im wesentlichen dadurch, daß die Versteifungen im Gebiet der größten Beanspruchung sitzen, vor allem nicht nur an den schwächsten Stellen zwischen den Bohrungen, sondern auch ringförmig um alle Bohrungen herum, so daß sich ein günstiger Kraftfluß zwischen den kreuzförmig angeordneten Stegen ergibt. Mit anderen Worten gesagt ergibt die Auflösung der Versteifungen entgegen den Erwartungen keine Verteuerung der Herstellung, sondern wegen der Möglichkeit der leichteren Ausbildung auch der Gitterplatte insgesamt die genannte Verbilligung, die als klares Anzeichen für einen unerwarteten technischen Fortschritt gewertet werden kann.

Die Erfindung unterscheidet sich auch von dem aus der DE-A-2 921 482 bekannten Lagergestell, bei dem an die Gitterplatte wenige Rohrstücke angeschweißt sind, nämlich beim Ausführungsbeispiel nur an vier von sechzehn bzw. zwölf Brennelementpositionen. Die bekannten Rohrstücke sind Teile von einstellbaren Füßen und sollen nach dem Einbau der Gitterplatte in ein Lagerbecken das Nivellieren duch von oben angreifende Werkzeuge ermöglichen. Zwischen den Füßen sind an den Bohrungen nur Rohrstummel angeordnet, die als Gegenmuttern für von oben eingefügte Hohlschrauben dienen. Die Rohrstummel werden als nachteilig angesehen, denn zu einer Ausführungsform, bei der das Gewinde für die Hohlschrauben in der Gitterplatte selbst angebracht ist, ist als zusätzlicher Vorteil hevorgehoben, daß die Rohrstummel und der Arbeitsaufwand zum Anschweißen der Rippen an die Rohrstummel entfallen können.

Die Länge der Rohrstücke kann wie bei den bekannten Füßen größer sein als die Höhe der Stege, weil dadurch das Verschweißen erleichtert werden kann. Aus dem gleichen Grunde sollte die Wandstärke der Rohrstücke so groß sein wie die Dicke der Stege.

Eine besonders günstige Ausführungsform der Erfindung ergibt sich dadurch, daß Gitterplatte, Rohrstücke und Stege ein einstückiger Gußkörper sind.

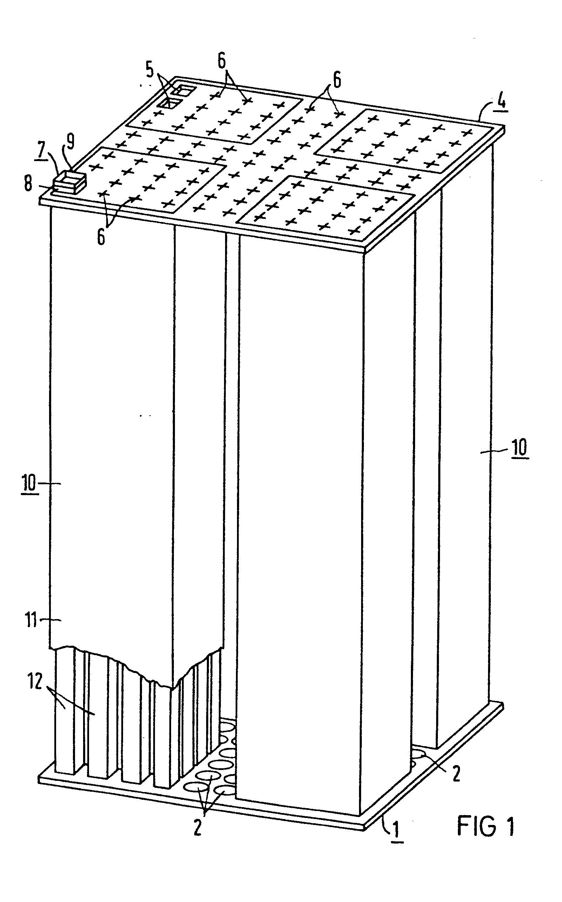

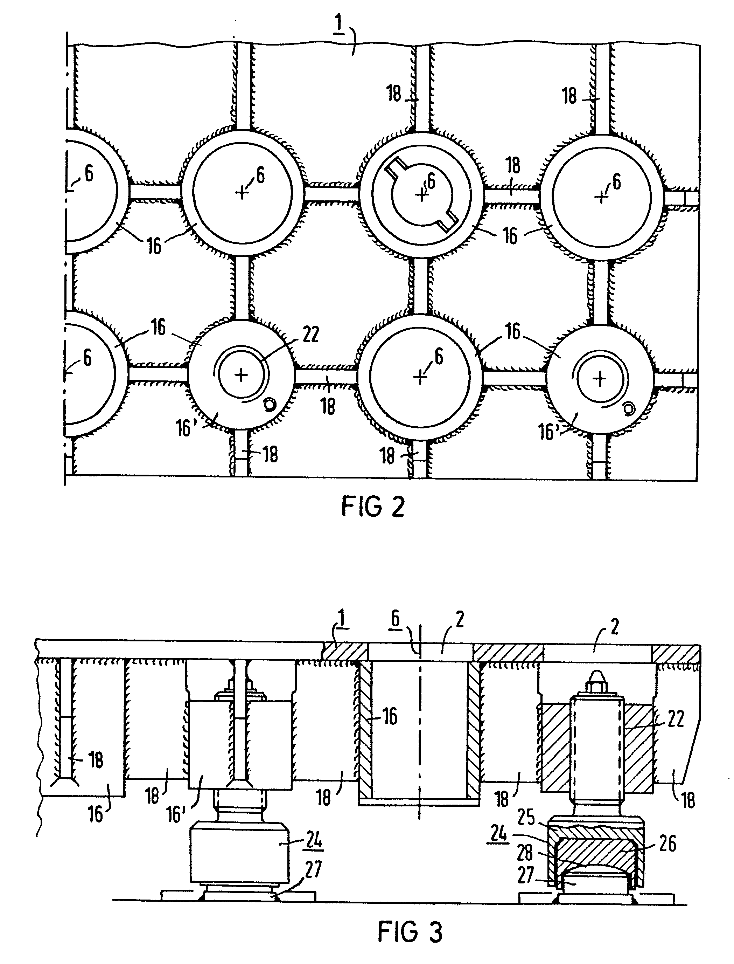

Zur näheren Erläuterung der Erfindung wird anhand der beiliegenden Zeichnung ein Ausführungsbeispiel beschrieben. Dabei zeigt Fig. 1 in vereinfacht perspektivischer Darstellung ein Lagergestell, das auch als Element für ein größeres Lager verbrauchter Brennelemente verwendet werden kann. Fig. 2 zeigt eine vergrößerte Draufsicht auf einen Teil einer Gitterplatte des Lagergestells. Die Fig. 3 zeigt die zur Fig. 2 gehörende Seitenansicht.

Das neue Lagergestell ist zur Aufnahme von Brennelementen für Leichtwasserreaktoren, insbesondere von Druckwasserreaktoren der Leistungsklasse von 1000 Mwe oder mehr vorgesehen. Es umfaßt eine untere Gitterplatte 1, die aus austenitischem Material mit einer geeigneten Wandstärke hergestellt wird. In der im wesentlichen ebenen Platte 1 sind Bohrungen 2 für den Durchtritt eines Kühlmittels vorgesehen. Die Gitterplatte 1 weist nicht dargestellte Füße auf.

Am oberen Ende ist eine Platte 4 ähnlich der unteren Gitterplatte 1 vorgesehen. Sie enthält entsprechend den aufzunehmenden Brennelementen mit quadratischen Querschnitt quadratische Öffnungen 5, die zum größten Teil nur durch Kreuze 6 als Brennelementpositionen gekennzeichnet sind. In den Öffnungen 5 sitzen Führungstrichter 7, die aus einem quadratischen Schachtstück 8 und einem aufgeweiteten Rand 9 bestehen. Die obere Gitterplatte 4 besteht ebenfalls aus austenitischem Material in massiver Form oder in Sandwich-Bauweise.

Als Stützeinrichtungen 10 sind zwischen der oberen Platte 4 und der unteren Gitterplatte 1 Blechrohre 11 mit dem aus der Fig. 1 ersichtlichen quadratischen Querschnitt vorgesehen, dessen Kantenlänge etwa das 7fache der Kantenlänge der aufzunehmenden Brennelemente beträgt. Die auch als Tragtürme bezeichneten Stützeinrichtungen 10 sind aus austenitischem Stahlblech von 4 mm Dicke hergestellt. Sie umschließen jeweils sechzehn Brennelementpositionen 6. Die Stützeinrichtungen 10 sitzen in den Ecken des insgesamt ebenfalls quadratischen Lagergestells. Zwischen den in den Ecken sitzenden Stützeinrichtungen 10 sind jeweils zwei Reihen von Brennelementpositionen 6 freigelassen, die zusammen ein Kreuz bilden, wie in Fig. 1 dargestellt ist.

Beim Ausführungsbeispiel nach Fig. 1 sind, wie auf der linken Seite unten zu sehen ist, den einzelnen Brennelementpositionen 6 quadratische Hüllen 12 aus neutronenabsorbierendem Material, vorzugsweise aus Borstahl, zugeordnet. Diese umschließen die Brennelemente und sorgen dafür, daß auch bei der aus der Fig. 1 ersichtlichen gedrängten Anordnung keine kritische Masse zustande kommt.

Die Fig. 2 zeigt in einer Draufsicht auf einen Teil der Unterseite der Gitterplatte 1, daß in dem Raster der Brennelementpositionen 6 jeder Bohrung 2 ein Rohrstück 16 zugeordnet ist, das konzentrisch zu den Mittelpunkten der Bohrungen 2 sitzt. Der Rohrstückaußendurchmesser beträgt 155 mm. Er ist damit größer als der nur 100 mm betragende Durchmesser der Bohrung 2 selbst. Zwischen den Rohrstücken 16, die in der Mehrzahl eine Wandstärke von 20 mm oder mehr haben, sind Stege 18 so angeordnet, daß sie fluchtend in den Verbindungslinien der Mittelpunkte liegen und an jedem Rohrstück 16 kreuzförmig, d. h. radial unter einem rechten Winkel zwischen benachbarten Stegen 18, angreifen. Die Stege 18 haben einen Rechteckquerschnitt mit 20 mm Breite und 185 mm Höhe, wie der Querschnitt nach Fig. 3 zeigt. Die Länge der Rohrstücke 16 beträgt dagegen 210 mm, so daß die Rohrstücke 16 über die Stege 18 hinausragen.

Wie in Fig. 2 und 3 stellenweise dargestellt ist, sind die Rohrstücke 16 und die Stege 18 miteinander und mit der Gitterplatte 1 verschweißt. Dadurch entsteht ein formsteifes Gebilde, das trotz der Schweißverbindungen zwischen den Stegen 18 und den Rohren 16 insgesamt billiger herzustellen ist als bekannte Gestelle, bei denen die Versteifungsrippen durchgehend zwischen den Bohrungen verlaufen oder nur einzelne als Füße verwendete Rohrstücke vorhanden sind.

Bei dem Ausführungsbeispiel nach Fig. 2 sind von neun Rohrstücken 16 vier als sogenannte Tragrohre ausgebildet und mit 16' bezeichnet. Sie besitzen bei etwas kleinerem Außendurchmesser (170 mm) eine größere Wandstärke, denn ihre Innenbohrung ist bei 75 mm lichte Weite mit einem Gewinde 22 versehen. In dieses Gewinde können, wie Fig. 3 zeigt, Füße 24 höhenverstellbar eingeschraubt werden. Im einzelnen besitzen die Füße 24 eine nach unten geöffnete Haube 25 mit einem Einsatzkörper 26, der über einen Aufstandskörper 27 greift. Die Oberfläche 28 des Aufstandskörpers 27 ist ballig gerundet. Ebenso ist der auf diese Fläche greifende Teil des Einsatzkörpers 26 ballig ausgeführt, so daß eine kugelgelenkige Verbindung gegeben ist.

Beim Ausführungsbeispiel ist die Erfindung in Form einer Schweißkonstruktion verwirklicht. Die gleiche Gestaltung läßt sich aber insbesondere bei größeren Stückzahlen noch günstiger als Gußstück realisieren. Dabei kann vorteilhaft das Verhältnis von Höhe zu Breite der Stege 18 von 1 : 9 auf etwa 1 : 5 verändert werden. Entsprechendes gilt für Wandstärke und Länge der Rohrstücke 16. Ferner kann bei einer Gußkonstruktion das Entformen durch Abrundungen und Schrägen erleichtert werden.

## Patentansprüche

1. Lagergestell für langgestreckte Brennelemente von Kernreaktoren, mit einer unteren Gitterplatte, die an den für die Brennelemente vorgesehenen Positionen Bohrungen aufweist und mit Versteifungen in Form von geradlinigen Rippen an der Unterseite der Platte versehen ist, die fluchtend in Richtung der Mittelpunkte der Bohrungen verlaufen, wobei an der Unterseite der Platte konzentrisch zu Bohrungen sitzende Rohrstücke durch geradlinige Stege verbunden sind, dadurch gekennzeichnet, daß an jeder Bohrung (2) ein Rohrstück (16) vorgesehen ist, dessen Länge mindestens gleich dem Bohrungsdurchmesser ist, und daß die Rohrstücke (16) durch dazwischenliegende Stege (18) kreuzweise verbunden sind.

2. Lagergestell nach Anspruch 1, dadurch gekennzeichnet, daß die Länge der Rohrstücke (16) geringfügig größer als die Höhe der Stege (18) ist.

3. Lagergestell nach Anspruch 1 oder 2, dadurch gekennzeichnet, daß Gitterplatte (1), Rohrstücke (16) und Stege (18) ein einstückiger Gußkörper sind.

## Claims

1. A storage rack for elongate fuel elements of nuclear reactors comprising a lower grid plate which has bores at the positions provided for the fuel elements and which on the underside is provided with stiffening in the form of rectilinear ribs which run in alignment in the direction of the centre points of the bores, wherein, on the underside of the plate, pipe sections, which are positioned concentrically to the bores, are connected by rectilinear cross-pieces, characterised in that a pipe piece (16), whose length is at least equal to the bore diameter, is arranged on each bore (2); and that the pipe sections (16) are connected cross-wise by interposed cross-pieces (18).

2. A storage rack as claimed in Claim 1, characterised in that the length of the pipe pieces (16) is negligibly greater than the height of the cross-pieces (18).

3. A storage rack as claimed in Claim 1 or Claim 2, characterised in that the grid plate (1), pipe sections (16) and cross-pieces (18) are an integral cast body.

## Revendications

1. Râtelier de stockage pour des éléments combustibles oblongs de réacteurs nucléaires, comprenant une plaque inférieure formant grille, qui présente des perçages en les positions prévues pour les éléments combustibles et qui est munie, sur la face inférieure de la plaque, de renforcements en forme de nervures rectilignes, qui sont alignés dans la direction du centre des perçages, des pièces tubulaires disposées concentriquement aux perçages sur la face inférieure de la plaque étant reliées par des barrettes rectilignes, caractérisé en ce que, sur chaque perçage (2) est prévue une pièce tubulaire (16) de longueur au moins égale au diamètre du perçage et en ce que les pièces tubulaires sont reliées en croix par des barrettes (18) intermédiaires.

2. Râtelier de stockage suivant la revendication 1, caractérisé en ce que la longueur des pièces tubulaires (16) est légèrement plus grande que la hauteur des barrettes (18).

3. Râtelier de stockage suivant la revendication 1 ou 2, caractérisé en ce que la plaque formant grille (1), les pièces tubulaires (16) et les barrettes (18) sont un corps coulé d'une pièce.

FIG 1

FIG 2

FIG 3